# EUROPÄISCHE PATENTSCHRIFT

(11) **EP 3 098 958 B1**
(45) Veröffentlichungstag und Bekanntmachung des Hinweises auf die Patenterteilung: **27.03.2019**
(21) Anmeldenummer: 16168276.0
(22) Anmeldetag: 04.05.2016
(51) Int. Cl.: H02M 7/483, H02M 7/493

(54) **SPANNUNGSWANDLERANORDNUNG MIT KAPAZITIVER KOPPLUNG**
CONVERTER ASSEMBLY WITH CAPACITIVE COUPLING
DISPOSITION DE CONVERTISSEURS À COUPLAGE CAPACITIF

(30) Priorität: 29.05.2015 DE 102015209948
(43) Veröffentlichungstag der Anmeldung: 30.11.2016
(73) Patentinhaber: Siemens Aktiengesellschaft, 80333 München (DE)
(72) Erfinder: Schön, Andre, 91096 Möhrendorf (DE); Bakran, Mark-Matthias, 91052 Erlangen (DE); Knaak, Hans-Joachim, 91054 Erlangen (DE)

(56) Entgegenhaltungen:
- WO-A1-2010/088969
- WO-A1-2011/060812
- WO-A1-2011/127980
- WO-A1-2013/149633

## Beschreibung

Die Erfindung betrifft eine Spannungswandleranordnung mit einem ersten Umrichter, umfassend wenigstens eine Umrichterphase des ersten Umrichters, die sich zwischen einem ersten und einem zweiten oberspannungsseitigen Gleichspannungspol erstreckt und einen ersten und einen zweiten Phasenzweig des ersten Umrichters aufweist, wobei an einem Potenzialpunkt zwischen den beiden Phasenzweigen des ersten Umrichters ein Wechselspannungsanschluss des ersten Umrichters angeordnet ist und einem zweiten Umrichter, umfassend wenigstens eine Umrichterphase des zweiten Umrichters, die sich zwischen einem ersten und einem zweiten unterspannungsseitigen Gleichspannungspol erstreckt und einen ersten und einen zweiten Phasenzweig des zweiten Umrichters aufweist, wobei an einem Potenzialpunkt zwischen den beiden Phasenzweigen des zweiten Umrichters ein Wechselspannungsanschluss des zweiten Umrichters angeordnet ist, wobei die beiden Umrichter miteinander wechselspannungsseitig mittels einer Kopplungseinrichtung zu einer Umrichter-Parallelschaltung verbindbar sind, die unter Einbeziehung der Phasenzweige der beiden Umrichter wenigstens einen geschlossenen Strompfad für einen Kreis-Wechselstrom durch die Umrichter ausbildet.

Spannungswandleranordnungen, die als Gleichspannungswandler eingesetzt werden können, finden beispielsweise in der Kopplung von Gleichspannungsnetzen unterschiedlicher Spannungsniveaus Anwendung. Insbesondere zur Kopplung von Hochspannungsgleichstromübertragungsstrecken werden Gleichspannungswandler benötigt. Die hierbei zu transformierende Leistung kann bis zu mehreren 1000 MW erreichen. Für solche Anwendungen können weder die aus der Hochspannungswechselstromübertragung noch die aus der Mittelspannungstechnik bekannten Lösungen verwendet werden.

Aus dem Stand der Technik ist eine Spannungswandleranordnung der oben genannten Art bekannt. Die Anordnung der Umrichter bei dieser bekannten Spannungswandleranordnung wird oft als "front-to-front"-Topologie bezeichnet. Dabei sind die zwei Umrichter wechselspannungsseitig zu einer Umrichter-Parallelschaltung miteinander verbunden. Bei der bekannten Spannungswandleranordnung sind die beiden Umrichter induktiv, das heißt über einen Transformator, aneinander gekoppelt. Mittels der bekannten Spannungswandleranordnung kann eine an den oberspannungsseitigen Gleichspannungspolen abfallende Spannung in eine an den unterspannungsseitigen Gleichspannungspolen abfallende Spannung, oder umgekehrt, umgewandelt werden. Die Gleichspannungspole verbinden die Spannungswandleranordnung mit einer oberspannungsseitigen bzw. unterspannungsseitigen Gleichspannungsleitung. Dabei kann der erste oberspannungsseitige Gleichspannungspool beispielsweise mit jeweils einem Leiter auf einem positiven Potenzial verbunden sein und der zweite oberspannugsseitige und der zweite unterspannungsseitige Gleichspannungspol mit einem negativen Potenzial oder auch dem Erdpotenzial verbunden sein. Der bei diesem bekannten Gleichspannungswandler zur induktiven Kopplung benötigte Transformator weist allerdings ein hohes Gewicht auf und ist relativ kostenintensiv.

Aus der WO 2013/149633 A1 ist eine weitere Gleichspannungswandler-Topologie bekannt. Gemäß der WO 2013/149633 A1 werden Umrichter in Reihe geschaltet, wobei ein Umrichter der Reihe mit der Unterspannungsseite und die gesamte Reihe mit der Oberspannungsseite verbunden sind.

Die Aufgabe der Erfindung ist es, eine Spannungswandleranordnung der eingangs genannten Art vorzuschlagen, die einen Kostenvorteil gegenüber der bekannten Spannungswandleranordnung aufweist.

Die Aufgabe wird bei der bekannten Spannungswandleranordnung erfindungsgemäß dadurch gelöst, dass die Kopplungseinrichtung eine kapazitive Kopplung der Umrichter bereitstellt.

Die kapazitive Kopplung, geeigneterweise über eine Koppelkapazität, stellt sicher, dass der zu einer Energieübertragung zwischen den Umrichtern nötige Kreis-Wechselstrom über die Kopplungseinrichtung fließen kann. Zugleich kann die erfindungsgemäße Spannungswandleranordnung transformatorfrei realisiert werden. Da die Kosten einer Koppelkapazität meist niedriger sind als diejenigen eines Transformators, kann auf diese Weise ein Kostenvorteil gegenüber der bekannten Spannungswandleranordnung erzielt werden.

Vorzugsweise ist die die kapazitive Kopplung mittels wenigstens eines Kondensators realisiert. Dazu umfasst die Kopplungseinrichtung wenigstens einen Kondensator bzw. eine Kondensatoranordnung mit mehreren Kondensatoren, bevorzugt Leistungskondensatoren, die beispielsweise zu einer Reihenschaltung miteinander verbunden sind.

Geeigneterweise ist der Kondensator der Kopplungseinrichtung derart ausgelegt, dass sich die Polarität einer an dem wenigstens einen Kondensator abfallenden Spannung in einem Normalbetrieb der Spannungswandleranordnung nicht ändert. Somit ist erreicht, dass der Energiefluss zwischen den beiden Umrichtern stets in eine vorgegebene Richtung erfolgt, beispielsweise von der Oberspannungsseite zu der Unterspannungsseite. Aufgrund der konstanten Polarität ist eine große Vielfalt von Kondensatorarten einsehbar (wie beispielsweise neben Folienkondensatoren auch Elektrolytkondensatoren).

Vorzugsweise weist die Kopplungseinrichtung einen ersten Verbindungszweig mit wenigstens einem Kondensator auf, der die beiden Wechselspannungsanschlüsse verbindet. Der in den Umrichtern generierte Wechselstrom kann so über den Verbindungszweig zwischen den Umrichtern fließen. An dem Kondensator fällt im zeitlichen Mittel eine Spannung ab, die einer Differenz zwischen der halben oberspannungsseitigen Gleichspannung, und der halben unterspannungsseitigen Gleichspannung entspricht. Als oberspannungsseitige Gleichspannung wird dabei die an den oberspannungsseitigen Gleichspannungspolen abfallende Spannung und als unterspannungsseitige Gleichspannung die an den unterspannungsseitigen Gleichspannungspolen abfallende Spannung bezeichnet.

Um den geschlossenen Strompfad für den Kreis-Wechselstrom zu bilden, kann die Kopplungseinrichtung gemäß einer Ausführungsform der Erfindung bevorzugt einen zweiten Verbindungszweig, der den ersten oberspannungsseitigen Gleichspannungspol und den ersten unterspannungsseitigen Gleichspannungspol verbindet, sowie einen dritten Verbindungszweig umfassen, der den zweiten oberspannungsseitigen Gleichspannungspol und den zweiten unterspannungsseitigen Gleichspannungspol verbindet. Dabei weist der zweite Verbindungszweig und/oder der dritte Verbindungszweig wenigstens einen Kondensator auf. Der Kreis-Wechselstrom kann einerseits von dem ersten Phasenzweig des ersten Umrichters über den Verbindungszweig zwischen den Wechselspannungsanschlüssen zum ersten Phasenzweig des zweiten Umrichters und weiter über den zweiten Verbindungszweig zum ersten Phasenzweig des ersten Umrichters zurück fließen. Anderseits kann der Kreis-Wechselstrom vom zweiten Phasenzweig des ersten Umrichters über den Verbindungszweig zwischen den Wechselspannungsanschlüssen zum zweiten Phasenzweig des zweiten Umrichters, und von dort aus über den dritten Verbindungszweig zum zweiten Phasenzweig des ersten Umrichters zurück fließen. Ein Verbindungszweig kann auch eine Erdleitung sein, die durch Erdung der Umrichter bereitgestellt ist. In dem Fall, dass der zweite und/oder der dritte Verbindungszweig Kondensatoren aufweisen, ist es auch denkbar, dass der erste Verbindungszweig als eine direkte elektrische Verbindung, beispielsweise über eine Erdung, also insbesondere ohne Kondensatoren ausgebildet ist.

Gemäß einer Ausführungsform der Erfindung ist die wenigstens eine Umrichterphase des ersten Umrichters eine erste Umrichterphase des ersten Umrichters und der Wechselspannungsanschluss des ersten Umrichters ein erster Wechselspannungsanschluss des ersten Umrichters. Ferner weist der erste Umrichter eine zweite Umrichterphase auf, die sich zwischen dem ersten und dem zweiten oberspannungsseitigen Gleichspannungspol erstreckt. Die zweite Umrichterphase weist und einen dritten und einen vierten Phasenzweig auf, wobei an einem Potenzialpunkt zwischen dem dritten und vierten Phasenzweig des ersten Umrichters ein zweiter Wechselspannungsanschluss des ersten Umrichters angeordnet ist. Zugleich ist die wenigstens eine Umrichterphase des zweiten Umrichters eine erste Umrichterphase des zweiten Umrichters und der Wechselspannungsanschluss des zweiten Umrichters ein erster Wechselspannungsanschluss des zweiten Umrichters. Der zweite Umrichter weist ferner eine zweite Umrichterphase, die sich zwischen dem ersten und dem zweiten unterspannungsseitigen Gleichspannungspol erstreckt, sowie einen dritten und einen vierten Phasenzweig auf, wobei an einem Potenzialpunkt zwischen dem dritten und vierten Phasenzweig des zweiten Umrichters ein zweiter Wechselspannungsanschluss des zweiten Umrichters angeordnet ist. Die Kopplungseinrichtung umfasst dabei einen zweiten Verbindungszweig mit wenigstens einem Kondensator, der den zweiten Wechselspannungsanschluss des ersten Umrichters mit dem zweiten Wechselspannungsanschluss des zweiten Umrichters verbindet. Gemäß dieser Ausführungsform sind die beiden Umrichter zweiphasig ausgebildet. Der geschlossene Strompfad für den Kreis-Wechselstrom ist durch die beiden Verbindungszweige und die Phasenzweige der Umrichter gebildet. Die zweiphasige Ausführungsform der Erfindung kann leicht auch auf eine entsprechende dreiphasige Ausführungsform erweitert werden. Dazu umfassen der erste und der zweite Umrichter beispielsweise jeweils zusätzlich eine dritte Umrichterphase, die sich parallel zu der ersten bzw. der zweiten Umrichterphase erstreckt und zur ersten Umrichterphase gleichartig aufgebaut ist. Ein dritter Verbindungszweig verbindet einen dritten Wechselspannungsanschluss des ersten Umrichters mit einem dritten Wechselspannungsanschluss des zweiten Umrichters.

Gemäß einer weiteren Ausführungsform der Erfindung umfasst der erste Umrichter einen Parallelzweig, der sich zwischen dem ersten und dem zweiten oberspannungsseitigen Gleichspannungspol parallel zu der Umrichterphase des ersten Umrichters erstreckt, und in dem ein Kondensator angeordnet ist. Der Parallelzweig ermöglicht einen zusätzlichen geschlossenen Strompfad, in dem ein Kreisstrom fließen kann. Dadurch kann ein unerwünschter Wechselstromanteil des Gleichstromes in zumindest einer der angeschlossenen Gleichspannungsleitungen reduziert werden. Selbstredend kann auch ein zweiter Parallelzweig mit einem weiteren Kondensator vorgesehen sein, der parallel zu der Umrichterphase des zweiten Umrichters angeordnet ist. Die Funktionsweise des zweiten Parallelzweiges entspricht deren des ersten.

Bevorzugt weist der Parallelzweig eine Reihenschaltung zweipoliger Konvertermodule auf, die jeweils wenigstens einen Halbleiterschalter und einen Kondensator umfassen. Der Kondensator des Parallelzweiges ist damit in die Konvertermodule integriert. Auf diese Weise ist eine besonders flexible Unterdrückung des Wechselspannungsanteils bereitgestellt.

Vorzugsweise umfasst die Kopplungseinrichtung wenigstens eine Reihenschaltung zweipoliger Kopplungsmodule, wobei jedes Kopplungsmodul wenigstens einen Halbleiterschalter und einen Kondensator umfasst. Die kapazitive Kopplung der Umrichter ist gemäß dieser Ausführungsform in Form von Kondensatoren realisiert, die in die Kopplungsmodule integriert sind.

Geeigneterweise sind die Halbleiterschalter der Konvertermodule und/oder der Kopplungsmodule ein- und abschaltbare Halbleiterschalter, die mittels einer geeigneten Steuerung ansteuerbar sind. Mittels der Steuerung kann beispielsweise eine Gleichspannung an der Reihenschaltung der Kopplungsmodule modelliert werden. Auf diese Weise wird eine besonders flexible kapazitive Kopplung der Umrichter erreicht. Als Halbleiterschalter kommen insbesondere aus dem Stand der Technik bekannten Leistungshalbleiterschalter wie IGBTs (Insulated Gate-Bipolar Transistor) oder IGCTs (Integrated Gate-Commutated Thyristor) in Frage.

Sind die Wechselspannungsanschlüsse der beiden Umrichter mittels der Verbindungszweige verbunden, so weist wenigstens einer der Verbindungszweige vorzugsweise eine Reihenschaltung der zweipoligen Kopplungsmodule auf. Damit können die Kopplungsmodule beispielsweise eine im Verbindungszweig angeordnete Kondensatoranordnung zumindest teilweise ersetzen. Bevorzugt sind die Kopplungsmodule als Halbbrückenschaltungen realisiert. Eine solche Halbbrückenschaltung ist beispielsweise in der DE 101 03 031 B4 beschrieben. Eine Halbbrückenschaltung weist eine Reihenschaltung von zwei Leistungshalbleiterschalteinheiten mit gleicher Durchlassrichtung, wobei jede Leistungshalbleiterschalteinheit wenigstens einen ein- und abschaltbaren Leistungshalbleiterschalter aufweist. Ferner umfasst die Halbbrückenschaltung einen Energiespeicher, beispielsweise einen Leistungskondensator, der parallel zu der Reihenschaltung der Leistungshalbleiterschalteinheiten angeordnet ist. Die Halbbrückenschaltung verfügt über zwei Anschlüsse beziehungsweise Klemmen, wobei ein erster Anschluss mit einer der Leistungshalbleiterschalteinheiten und mit dem Energiespeicher verbunden ist und der andere an einem Potenzialpunkt zwischen den Leistungshalbleiterschalteinheiten angeordnet ist. Aufgrund der verhältnismäßig kleinen Verluste sind solche Kopplungsmodule besonders kostengünstig im Betrieb. Entsprechend können die Konvertermodule (alle oder zumindest einige) in Form einer der im Zusammenhang mit den Kopplungsmodulen beschriebenen Schaltungen realisiert sein.

Die Kopplungsmodule können jedoch auch als Vollbrückenschaltungen oder andere geeignete Schaltungen, wie sogenannte Double-Clamp-Module realisiert sein. Es ist selbstverständlich auch denkbar, dass nicht alle Kopplungsmodule gleichartig aufgebaut sind. Vielmehr können beispielsweise einige der Kopplungsmodule als Halbbrückenschaltungen, andere als Vollbrückenschaltungen ausgebildet sein.

Gemäß einer Ausführungsform der Erfindung sind der erste und/oder der zweite Umrichter ein modularer Mehrstufenumrichter (MMC).

Dazu weisen die Phasenzweige des Umrichters jeweils eine Reihenschaltung zweipoliger Submodule auf, wobei jedes Submodul ein- und abschaltbare Leistungshalbleiterschalter sowie einen Energiespeicher, bevorzugt in Form eines Kondensators, umfasst. Ferner ist jedes der Submodule einzeln ansteuerbar. Eine an dem Phasenzweig abfallende Spannung ist gleich der Summe von Spannungen, die an den zugehörigen Submodulen abfallen. Mittels des MMC ist eine besonders vorteilhafte stufenförmige Konverterspannung erzeugbar. Ein MMC ist beispielsweise in der DE 101 03 031 B4 beschrieben. Bevorzugt sind die Submodule als Halbbrückenschaltungen oder als Vollbrückenschaltungen ausgebildet. Der MMC kann auch unterschiedlich ausgebildete Submodule umfassen, so dass nicht alle Submodule des MMC gleichartig aufgebaut sind.

Im Betrieb wird von den Submodulen in jeder der Umrichterphasen der beiden Umrichter eine Phasenspannung erzeugt, die eine Überlagerung einer Gleichspannung und einer Wechselspannung ist. Wird beispielsweise die oberspannungsseitige Gleichspannung mit UDC1 bezeichnet, so ist die Phasenspannung gleich UDC1+uac, wobei mit uac der Wechselspannungsanteil der Phasenspannung bezeichnet wird. Die Wechselspannung uac erzeugt den Kreis-Wechselstrom, der in dem durch die Kopplungseinrichtung unter Einbeziehung der Phasenzweige gebildeten geschlossenen Strompfad zwischen den Umrichtern fließt. Durch eine Bestimmung eines Phasenversatzes zwischen den in dem ersten und dem zweiten Umrichter erzeugten Wechselspannungen wird eine Stromrichtung des Kreis-Wechselstromes definiert. Diese Stromrichtung definiert zugleich die Richtung der Leistungsübertragung.

Die Erfindung soll im Folgenden anhand der in den Figuren 1 bis 10 dargestellten Ausführungsbeispiele weiter erörtert werden.
Figur 1 zeigt ein erstes Ausführungsbeispiel einer erfindungsgemäßen Spannungswandleranordnung in schematischer Darstellung;
Figur 2 zeigt ein zweites Ausführungsbeispiel einer erfindungsgemäßen Spannungswandleranordnung in schematischer Darstellung;
Figur 3 zeigt ein drittes Ausführungsbeispiel einer erfindungsgemäßen Spannungswandleranordnung in schematischer Darstellung;
Figur 4 zeigt ein viertes Ausführungsbeispiel einer erfindungsgemäßen Spannungswandleranordnung in schematischer Darstellung;
Figur 5 zeigt ein fünftes Ausführungsbeispiel einer erfindungsgemäßen Spannungswandleranordnung in schematischer Darstellung;
Figur 6 zeigt ein sechstes Ausführungsbeispiel einer erfindungsgemäßen Spannungswandleranordnung in schematischer Darstellung;
Figur 7 zeigt ein siebtes Ausführungsbeispiel einer erfindungsgemäßen Spannungswandleranordnung in schematischer Darstellung;
Figur 8 zeigt ein erstes Beispiel eines Submoduls in schematischer Darstellung;
Figur 9 zeigt ein zweites Beispiel eines Submoduls in schematischer Darstellung;
Figur 10 zeigt ein drittes Beispiel eines Submoduls in schematischer Darstellung.

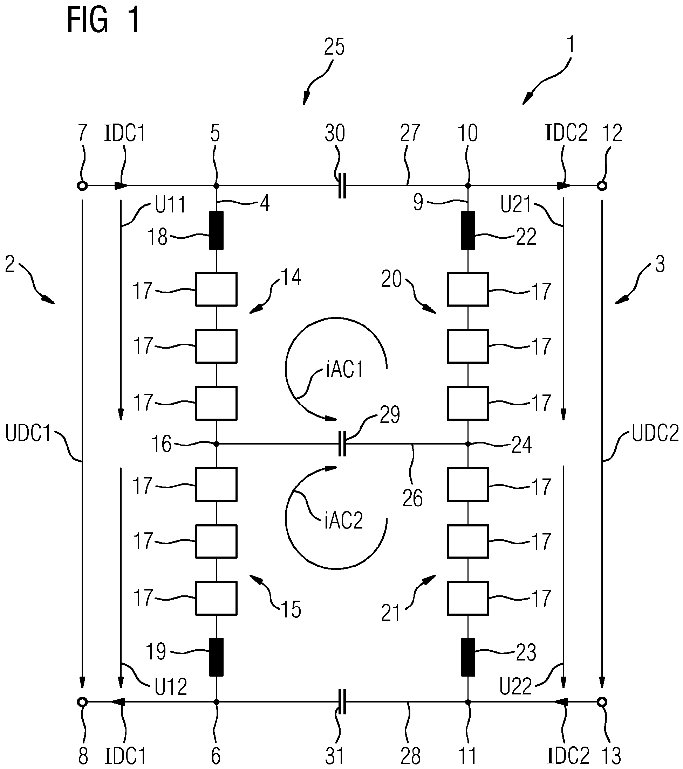

Im Einzelnen ist in Figur 1 ein erstes Ausführungsbeispiel einer erfindungsgemäßen Spannungswandleranordnung 1 dargestellt. Die Spannungswandleranordnung 1 umfasst einen ersten Umrichter 2 sowie einen zweiten Umrichter 3. Der erste Umrichter 2 weist eine Umrichterphase 4 auf, wobei sich die Umrichterphase 4 zwischen einem ersten oberspannungsseitigen Gleichspannungspol 5 und einem zweiten oberspannungsseitigen Gleichspannungspol 6 erstreckt. Der erste oberspannungsseitige Gleichspannungspol 5 ist mit einem ersten Gleichspannungsanschluss 7 verbunden, der zweite oberspannungsseitige Gleichspannungspol 6 ist mit einem zweiten oberspannungsseitigen Gleichspannungsanschluss 8 verbunden. Die oberspannungsseitigen Gleichspannungsanschlüsse 7, 8 sind dazu eingerichtet, den ersten Umrichter 2 mit einer oberspannungsseitigen Gleichspannungsleitung (in Figur 1 nicht dargestellt) zu verbinden.

Entsprechend weist der zweite Umrichter 3 eine Umrichterphase 9 auf, die sich zwischen einem ersten unterspannungsseitigen Gleichspannungspol 10 und einem zweiten unterspannungsseitigen Gleichspannungspol 11 erstreckt. Der erste unterspannungsseitige Gleichspannungspol 10 ist mit einem ersten unterspannungsseitigen Gleichspannungsanschluss 12 verbunden. Der zweite unterspannungsseitige Gleichspannungspol 11 ist mit einem zweiten unterspannungsseitigen Gleichspannungsanschluss 13 verbunden. Die beiden unterspannungsseitigen Gleichspannungsanschlüsse 12, 13 sind dazu eingerichtet, den zweiten Umrichter 3 mit einer in Figur 1 nicht dargestellten unterspannungsseitigen Gleichspannungsleitung zu verbinden.

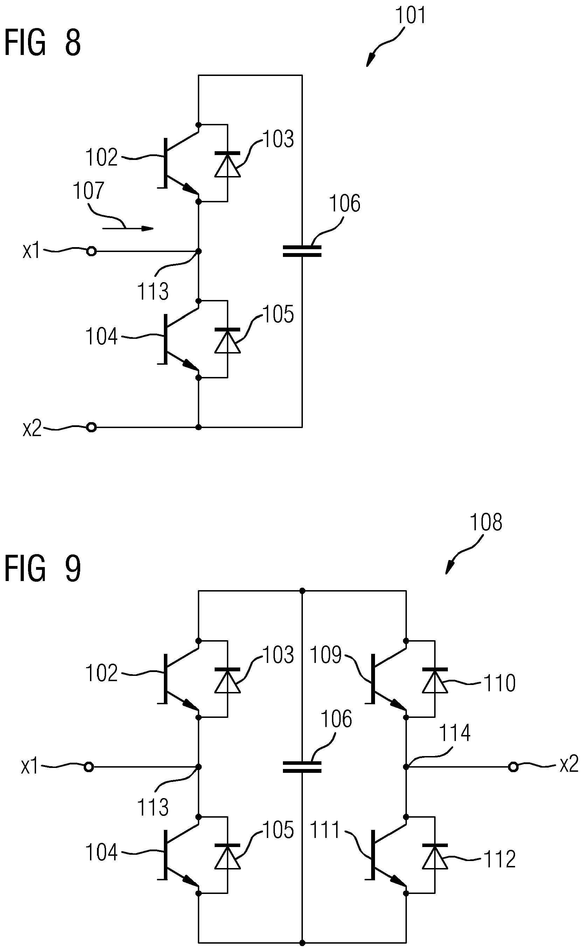

Der erste Umrichter 2 umfasst einen ersten Phasenzweig 14 und einen zweiten Phasenzweig 15. Der erste Phasenzweig 14 des ersten Umrichters und der zweite Phasenzweig 15 des ersten Umrichters sind in einem Potenzialpunkt 16 miteinander verbunden. Der Potenzialpunkt 16 bildet einen Wechselspannungsanschluss des ersten Umrichters 2. Der erste Phasenzweig 14 des ersten Umrichters 2 weist eine Reihenschaltung zweipoliger Submodule 17 auf, wobei jedes der Submodule 17 einen Energiespeicher sowie wenigstens einen Leistungshalbleiterschalter umfasst. In Reihe zu der Reihenschaltung zweipoliger Submodule 17 ist eine Glättungsdrossel 18 angeordnet. Ebenso umfasst der zweite Phasenzweig 15 des ersten Umrichters 2 eine Reihenschaltung zweipoliger Submodule 17 und eine dazu in Reihe geschaltete Glättungsdrossel 19. Gemäß dem dargestellten Ausführungsbeispiel sind die Submodule 17 als eine der in den Figuren 8 bis 10 gezeigten Schaltungen ausgebildet, so dass der erste Umrichter 2 ein modularer Mehrstufenumrichter in dessen einphasiger Ausführung.

Entsprechend umfasst der zweite Umrichter 3 einen ersten Phasenzweig 20 und einen zweiten Phasenzweig 21. Der erste Phasenzweig 20 des zweiten Umrichters 3 weist eine Reihenschaltung der zweipoligen Submodule 17 auf sowie eine dazu in Reihe geschaltete Glättungsdrossel 22. Der zweite Phasenzweig 21 weist ebenfalls eine Reihenschaltung der zweipoligen Submodule 17 sowie eine dazu in Reihe geschaltete Glättungsdrossel 23 auf. Die beiden Phasenzweige 20, 21 des zweiten Umrichters 3 sind in einem Potenzialpunkt 24 miteinander verbunden, der einen Wechselspannungsanschluss des zweiten Umrichters 3 bildet.

Die Spannungswandleranordnung 1 umfasst ferner eine Kopplungseinrichtung 25. Die Kopplungseinrichtung 25 umfasst einen ersten Verbindungszweig 26, einen zweiten Verbindungszweig 27 und einen dritten Verbindungszweig 28. Der erste Verbindungszweig 26 verbindet den Potenzialpunkt 16 mit dem Potenzialpunkt 24. Der zweite Verbindungszweig 27 verbindet den ersten oberspannungsseitigen Gleichspannungspol 5 mit dem ersten unterspannungsseitigen Gleichspannungspol 10. Der dritte Verbindungszweig 28 verbindet den zweiten oberspannungsseitigen Gleichspannungspol 6 mit dem zweiten unterspannungsseitigen Gleichspannungspol 11. In jedem der drei Verbindungszweige 26 bis 28 ist ein Kondensator angeordnet. So ist im ersten Verbindungszweig 26 ein erster Kondensator 29 angeordnet, in zweiten Verbindungszweig 27 ein zweiter Kondensator 30 angeordnet und im dritten Verbindungszweig 28 ein dritter Kondensator 31 angeordnet. Es ist hierbei darauf hinzuweisen, dass jeder der Kondensatoren 29, 30, 31 auch durch eine Reihenschaltung von Kondensatoren ersetzt werden kann. Ebenso ist darauf hinzuweisen, dass die Anzahl der Submodule 17 in den Phasenzweigen 14, 15, 20, 21 beliebig gewählt werden kann und nicht auf die in Figur 1 dargestellte Anzahl von drei beschränkt ist. Im Fall von Hochspannungsanwendungen kann diese Anzahl bis zu mehreren Hundert betragen.

Aufgrund der Anordnung der Kondensatoren 20, 30, 31 in den Verbindungszweigen 26, 27, 28 ist eine kapazitive Kopplung des ersten Umrichters 2 und des zweiten Umrichters 3 bereitgestellt.

In einem Normalbetrieb der Spannungswandleranordnung 1 fällt an den oberspannungsseitigen Gleichspannungsanschlüssen 7, 8 eine Spannung UDC1 ab. Entsprechend fällt an den unterspannungsseitigen Gleichspannungsanschlüssen 12, 13 eine Spannung UDC2 ab. Dementsprechend fließt an den oberspannungsseitigen Gleichspannungspolen ein Strom IDC1 und an den unterseitigen Gleichspannungspolen ein Strom IDC2, deren Richtungen jeweils durch entsprechende Pfeile in Figur 1 angedeutet sind. Um einen Energieaustausch zwischen der Oberspannungsseite und der Unterspannungsseite zu gewährleisten, modelliert der erste Umrichter 2 eine Spannung, die sich aus der Spannung UDC1 und einer Wechselspannung UAC1 zusammensetzt. Es gilt, dass für eine am ersten Phasenzweig 14 des ersten Umrichters 2 abfallende Spannung U11: U11 = UDC1/2 + UAC1. Entsprechend gilt für eine an dem zweiten Phasenzweig 15 des ersten Umrichters abfallende Spannung U12: U12 = UDC1/2 - UAC1. Der zweite Umrichter 3 erzeugt zugleich im ersten Phasenzweig 20 eine Spannung U21, für die gilt, dass U21 = UDC2/2 + UAC2, und im zweiten Phasenzweig 21 eine Spannung U22, für die gilt, dass U22 = UDC2/2 - UAC2. Die Modellierung der Spannungen erfolgt mittels einer grafisch nicht dargestellten Steuereinrichtung zur Ansteuerung der Halbleiterschalter der Submodule 17.

Die Wechselspannungen UAC1 und UAC2 haben die gleiche Frequenz und Amplitude, sind jedoch gegeneinander phasenverschoben. Auf diese Weise ist erreicht, dass ein erster Kreis-Wechselstrom iAC1 erzeugt wird. Die Kopplungseinrichtung 25 bildet unter Einbeziehung der Phasenzweige der beiden Umrichter 2, 3 einen geschlossenen Strompfad für den Kreis-Wechselstrom iAC1, so dass dieser in der durch den ersten Phasenzweig 14 des ersten Umrichters 2, den ersten Verbindungszweig 26, den ersten Phasenzweig 20 des zweiten Umrichters 3 und den zweiten Verbindungszweig 27 gebildeten Masche fließt. Entsprechend fließt in der durch den zweiten Phasenzweig 15 des ersten Umrichters 2, den ersten Verbindungszweig 26, den zweiten Phasenzweig 21 des zweiten Umrichters 3 und den dritten Verbindungszweig 28 gebildeten Masche ein zweiter Kreis-Wechselstrom iAC2. Dementsprechend ist eine an dem Kondensator 29 im ersten Verbindungszweig 26 abfallende Spannung Ukond im Mittel gleich der Differenz der halben oberspannungsseitigen Gleichspannung UDC1 und der halben unterspannungsseitigen Gleichspannung UDC2. Ein Wechselspannungsanteil UkondAC der am Kondensator 29 abfallenden Spannung Ukond hat den Betrag |UkondAC|= |iAC1+iAC2|/wC, wobei w die Frequenz der Wechselspannung und C die Kapazität des Kondensators 29 bezeichnen. Bei geeigneter Auslegung des Kondensators 29, bzw. dessen Kapazität ändert sich somit die Polarität der am Kondensator 29 abfallenden Spannung Ukond nicht.

Aufgrund der galvanischen Trennung durch die Kondensatoren 29-31 in den Verbindungszweigen können die Gleichströme IDC1 und IDC2 nicht zwischen den Umrichtern 2, 3 fließen.

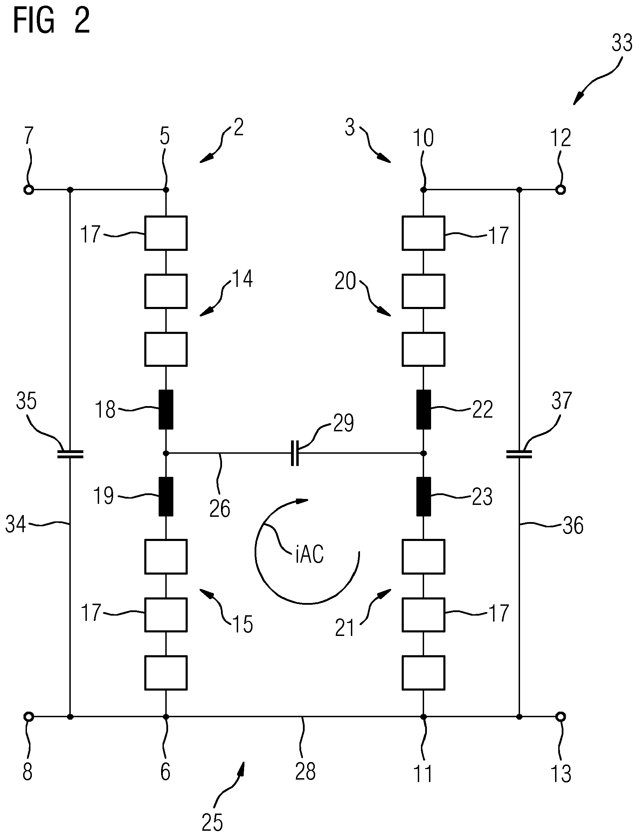

In den nachfolgenden Figuren 2 bis 7 sind weitere Ausführungsbeispiele der erfindungsgemäßen Spannungswandleranordnung dargestellt. Gleiche oder gleichartige Bauteile und Elemente der gezeigten Spannungswandleranordnungen sind dabei der Übersichtlichkeit wegen stets mit gleichen Bezugszeichen versehen. Die Funktionsweise der dargestellten unterschiedlichen Ausführungsbeispiele ist grundsätzlich gleich. Aus diesem Grund wird bei der Beschreibung der weiteren Ausführungsbeispiele lediglich auf die Unterschiede zwischen diesen näher eingegangen.

Figur 2 zeigt ein zweites Ausführungsbeispiel einer erfindungsgemäßen Spannungswandleranordnung 33. Der erste Umrichter 2 und der zweite Umrichter 3 sind miteinander mittels der Kopplungseinrichtung 25 verbunden. In dem in Figur 2 dargestellten Ausführungsbeispiel umfasst die Kopplungseinrichtung 25 den ersten Verbindungszweig 26 mit dem Kondensator 29 und den dritten Verbindungszweig 28, in dem jedoch kein Kondensator angeordnet ist. Durch geeignete Ansteuerung der Halbleiterschalter in den Submodulen 17 der beiden Umrichter 2 und 3 wird ein Kreis-Wechselstrom iAC erzeugt, der in der durch den zweiten Phasenzweig 15 des ersten Umrichters 2, den ersten Verbindungszweig 26, den zweiten Phasenzweig 21 des zweiten Umrichters 3 und den dritten Verbindungszweig 28 gebildeten Masche fließt und für die Energieübertragung zwischen dem ersten Umrichter 2 und dem zweiten Umrichter 3 sorgt.

Die Spannungswandleranordnung 33 umfasst ferner einen ersten Parallelzweig 34. Der erste Parallelzweig 34 erstreckt sich zwischen dem ersten oberspannungsseitigen Gleichspannungspol 5 und dem zweiten oberspannungsseitigen Gleichspannungspol 6 parallel zu den Phasenzweigen 14, 15 des ersten Umrichters 2. Ein Kondensator 35 ist in dem ersten Verbindungszweig 34 angeordnet.

Zudem umfasst die Spannungswandleranordnung 33 einen zweiten Parallelzweig 36. Der zweite Parallelzweig 36 erstreckt sich zwischen dem ersten unterspannungsseitigen Gleichspannungspol 10 und dem zweiten unterspannungsseitigen Gleichspannungspol 11 parallel zu den Phasenzweigen 20, 21 des zweiten Umrichters 3. Ein Kondensator 37 ist in dem zweiten Parallelzweig 36 angeordnet.

Der erste Parallelzweig 34 bildet zusammen mit den Phasenzweigen 14, 15 des ersten Umrichters 2 eine geschlossene Masche, die einen Kreisstrom führen kann. Entsprechend bildet der zweite Parallelzweig 36 zusammen mit den Phasenzweigen 20, 21 des zweiten Umrichters 3 eine weitere geschlossene Masche, die einen weiteren Kreisstrom führen kann. Dadurch können eventuelle Wechselstromanteile in dem oberspannungsseitigen Gleichstrom IDC1 und dem unterspannungsseitigen Gleichstrom IDC2 besser vermieden oder reduziert werden.

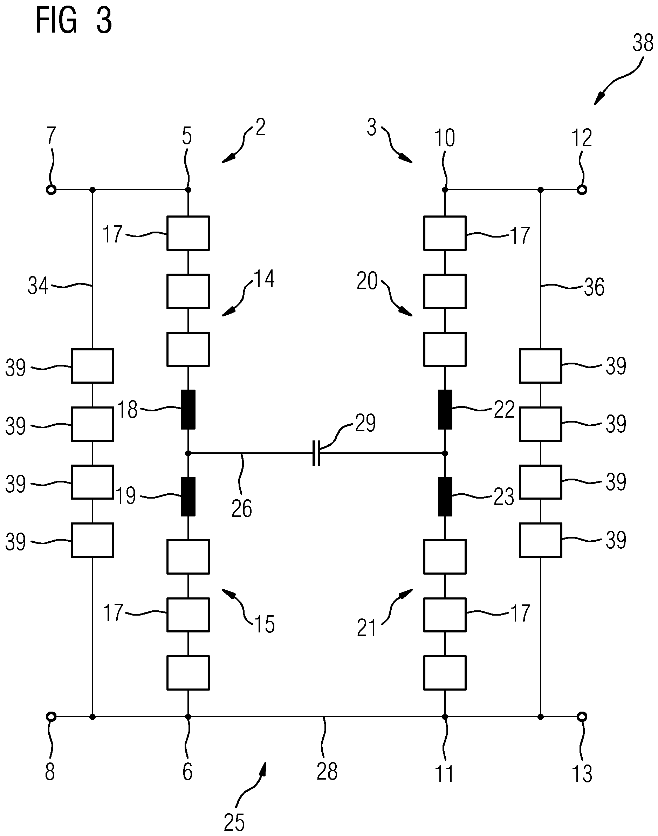

In Figur 3 ist eine erfindungsgemäße Spannungswandleranordnung 38 dargestellt, deren Aufbau im Wesentlichen der Spannungswandleranordnung 33 aus Figur 2 entspricht. Im Unterschied zu der letzteren weist jedoch der erste Parallelzweig 34 der Spannungswandleranordnung 38 eine Reihenschaltung zweipoliger Konvertermodule 39 auf. Jedes Konvertermodul 39 umfasst wenigstens einen Halbleiterschalter sowie einen Kondensator, so dass kein Gleichstrom über den Parallelzweig 34 fließen kann. Ebenso umfasst der zweite Parallelzweig 36 eine Reihenschaltung der Konvertermodule 39.

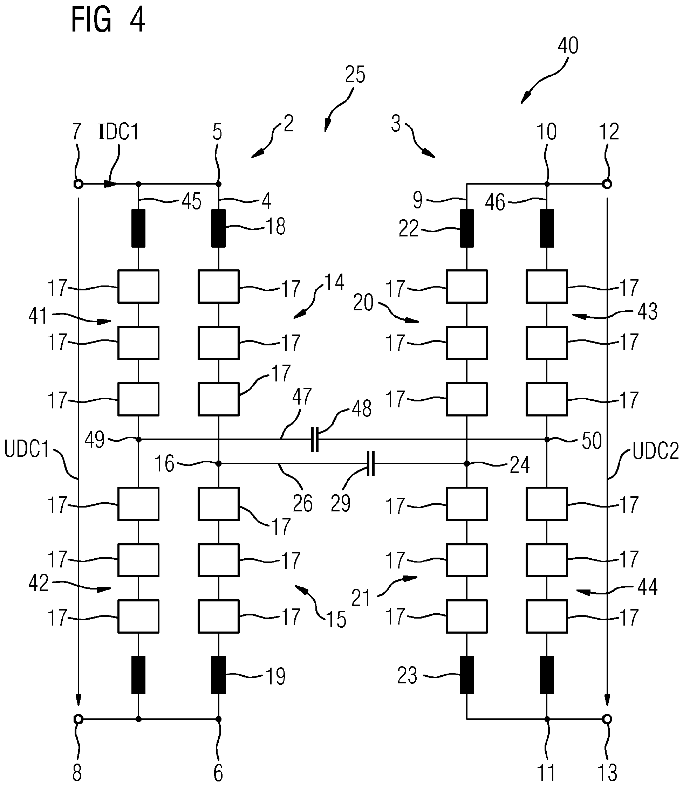

Figur 4 zeigt eine Spannungswandleranordnung 40 gemäß einem vierten Ausführungsbeispiel der Erfindung. Gemäß diesem Ausführungsbeispiel sind die beiden Umrichter 2 und 3 zweiphasig ausgebildet. Der erste Umrichter umfasst dementsprechend einen dritten Phasenzweig 41 und einen vierten Phasenzweig 42, die zusammen eine zweite Umrichterphase 45 des ersten Umrichters 2 bilden. Der dritte und der vierte Phasenzweig 41 bzw. 42 sind zum ersten Phasenzweig 14 des ersten Umrichters gleichartig aufgebaut. Ebenso weist der zweite Umrichter 3 der Spannungswandleranordnung 40 einen dritten Phasenzweig 43 und einen vierten Phasenzweig 44, die gemeinsam eine zweite Umrichterphase 46 des zweiten Umrichters 3 bilden. Die Kopplungseinrichtung 25 der Spannungswandleranordnung 40 umfasst einen den ersten Verbindungszweig 26 mit dem Kondensator 29, der den Wechselspannungsanschluss 16 der ersten Umrichterphase 4 des ersten Umrichters 2 mit dem Wechselspannungsanschluss 24 der ersten Umrichterphase 9 des zweiten Umrichters 3 verbindet. Ferner umfasst die Kopplungseinrichtung 25 einen zweiten Verbindungszweig 47 mit einem Kondensator 48, der einen zweiten Wechselspannungsanschluss 49 der zweiten Umrichterphase 45 des ersten Umrichters 2 mit einem zweiten Wechselspannungsanschluss 50 der zweiten Umrichterphase 46 des zweiten Umrichters 3 verbindet.

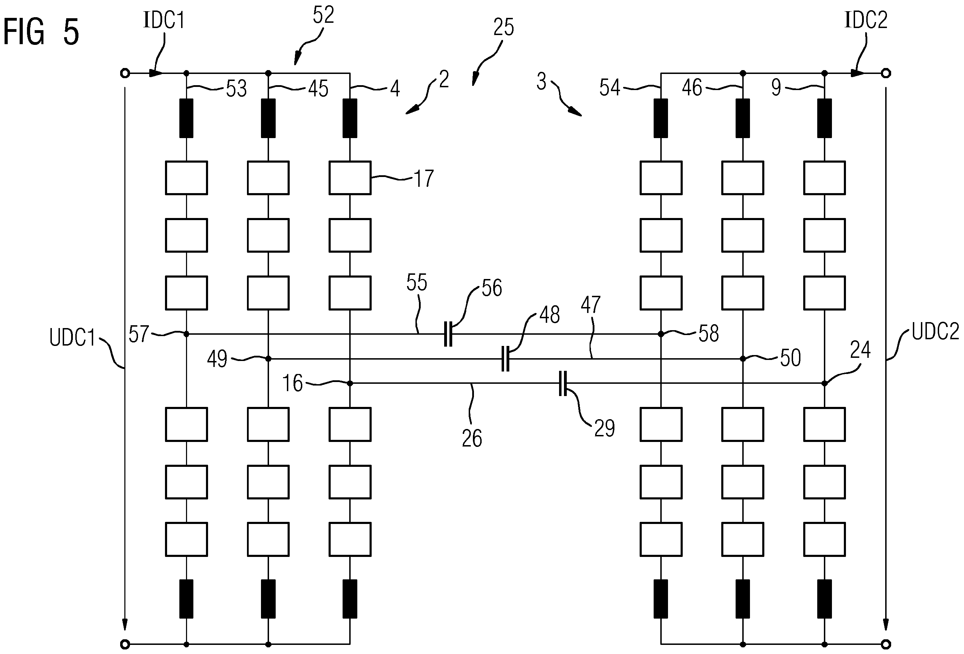

Figur 5 zeigt eine erfindungsgemäße Spannungswandleranordnung 52. Die Spannungswandleranordnung 52 entspricht in ihrem Aufbau im Wesentlichen der Spannungswandleranordnung 40 der Figur 4, wobei jedoch die beiden Umrichter 2 und 3 dreiphasig ausgebildet sind. Eine dritte Umrichterphase 53 des ersten Umrichters 2 entspricht dabei in ihrem Aufbau der ersten und der zweiten Umrichterphase 4 bzw. 45. Ebenso entspricht eine dritte Umrichterphase 54 des zweiten Umrichters 3 in ihrem Aufbau der ersten und zweiten Umrichterphase 9 bzw. 46 des zweiten Umrichters 3.

Die Kopplungseinrichtung 25 der Spannungswandleranordnung 52 umfasst drei Verbindungszweige 26, 47 bzw. 55, wobei der dritte Verbindungszweig 55 einen Kondensator 56 aufweist und einen dritten Wechselspannungsanschluss 57 der dritten Umrichterphase 53 des ersten Umrichters 2 mit einem dritten Wechselspannungsanschluss 58 der dritten Umrichterphase 54 des zweiten Umrichters 3 verbindet.

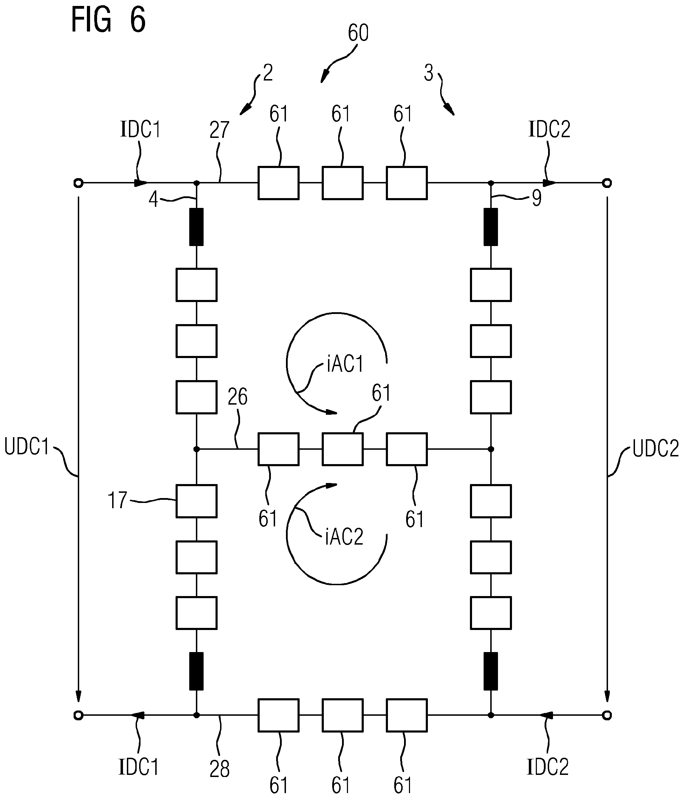

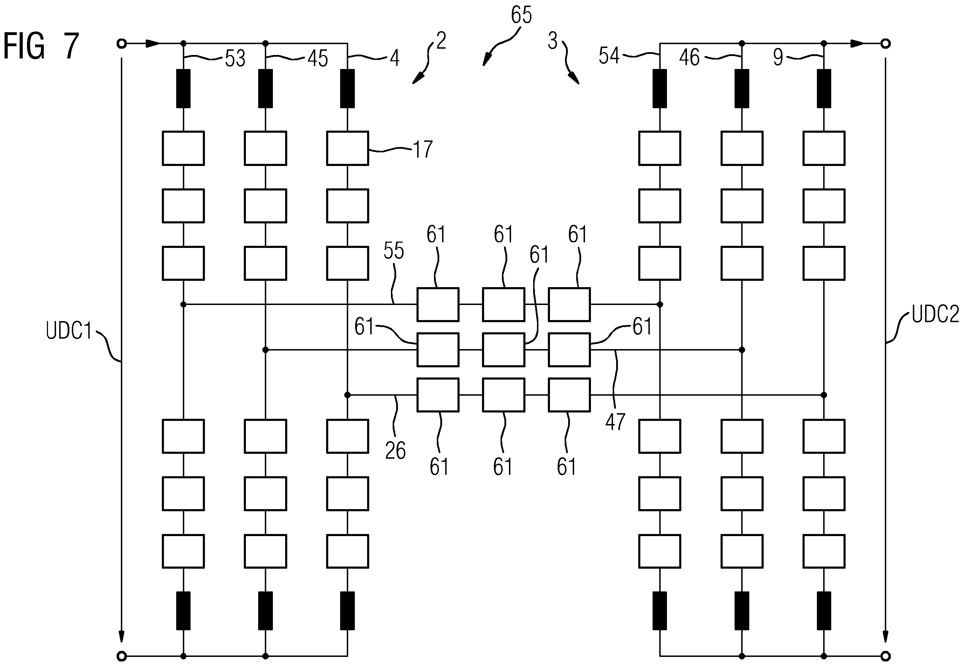

Figur 6 zeigt eine erfindungsgemäße Spannungswandleranordnung 60, die in ihrem Aufbau der Spannungswandleranordnung 1 der Figur 1 ähnelt. Im ersten, zweiten und dritten Verbindungszweig 26, 27 bzw. 28 der Kopplungseinrichtung 25 der Spannungswandleranordnung 60 ist jeweils eine Reihenschaltung von Kopplungsmodulen 61 angeordnet. Jedes Kopplungsmodul 61 weist wenigstens einen Halbleiterschalter und einen Kondensator auf, so dass der Kreis-Wechselstrom iAC1 und der Kreis-Wechselstrom iAC2 durch die Verbindungszweige und unter Einbeziehung der Umrichterphasen 4 und 9 der beiden Umrichter 2, 3 fließen können. Da die Halbleiterschalter der Kopplungsmodule 61 einzeln und voneinander im Wesentlichen unabhängig angesteuert werden können, kann in jeder der drei Reihenschaltungen von Kopplungsmodulen 61 durch abwechselnde Zuschaltung oder Überbrückung von Kondensatoren der Kopplungsmodule 61 eine von einer Wechselspannung überlagerte Gleichspannung eingestellt werden. Es ist an dieser Stelle anzumerken, dass die Anzahl der Kopplungsmodule 61 in den Reihenschaltungen in den Verbindungszweigen 26-28 beliebig und der jeweiligen Anwendung angepasst ist und nicht auf die in Figuren 6 und 7 dargestellte Anzahl von drei Kopplungsmodulen 61 beschränkt ist.

Figur 7 zeigt eine erfindungsgemäße Spannungswandleranordnung 65, die der Spannungswandleranordnung 52 der Figur 5 im Wesentlichen entspricht, mit dem Unterschied, dass in den Verbindungszweigen 26, 47 und 55 jeweils eine Reihenschaltung der zweipoligen Kopplungsmodule 61 angeordnet ist.

In den nachfolgenden Figuren 8, 9 und 10 sind unterschiedliche Ausführungsbeispiele der Submodule 17 der Umrichter 2, 3 gezeigt, die auch als Konvertermodule 39 und/oder Kopplungsmodule 61 eingesetzt werden können.

Figur 8 zeigt im Einzelnen ein Submodul in Form einer Halbbrückenschaltung 101. Die Halbbrückenschaltung 101 weist zwei Anschlüsse X1 und X2 auf. Der Anschluss X1 kann beispielsweise die Halbbrückenschaltung 101 mit dem Anschluss X2 einer weiteren Halbbrückenschaltung verbinden, so dass eine Reihenschaltung der Submodule gebildet wird.

Die Halbbrückenschaltung 101 umfasst einen ersten Halbleiterschalter 102 in Form eines Bipolartransistors mit isolierter Gate-Elektrode (IGBT), dem eine Freilaufdiode 103 antiparallel geschaltet ist. Ferner umfasst die Halbbrückenschaltung 101 einen zweiten Halbleiterschalter 104 in Form eines IGBT, dem eine Freilaufdiode 105 antiparallel geschaltet ist. Die Durchlassrichtung der beiden Halbleiterschalter 102 und 104 ist gleichgerichtet. Der erste Anschluss X1 ist an einem Potenzialpunkt 113 zwischen den beiden Halbleiterschaltern 102 und 104 angeordnet. Der zweite Anschluss X2 ist mit dem Emitter des zweiten Halbleiterschalters 104 verbunden.

Parallel zu den beiden Halbleiterschaltern 102, 104 ist ein Energiespeicher in Form eines Hochleistungskondensators 106 angeordnet. Durch eine geeignete Ansteuerung der Halbleiterschalter 102, 104 kann, bei einer durch einen Pfeil 107 angedeuteten Betriebsstromrichtung, der Kondensator 106 zugeschaltet oder überbrückt werden, so dass an den Anschlüssen X1, X2 entweder die am Kondensator 106 abfallende Spannung oder eine Spannung null abfällt.

Ein Beispiel eines Submoduls in Form einer Vollbrückenschaltung 108 ist in Figur 9 schematisch dargestellt. Die Vollbrückenschaltung 108 weist einen ersten Halbleiterschalter 102 in Form eines IGBT, dem eine Freilaufdiode 103 antiparallel geschaltet ist sowie einen zweiten Halbleiterschalter 104 in Form eines IGBT, dem eine Freilaufdiode 105 antiparallel geschaltet ist. Die Durchlassrichtung der beiden Halbleiterschalter 102 und 104 ist gleichgerichtet. Ferner umfasst die Vollbrückenschaltung 108 einen dritten Halbleiterschalter 109 in Form eines IGBT, dem eine Freilaufdiode 110 antiparallel geschaltet ist sowie einen vierten Halbleiterschalter 111 in Form eines IGBT, dem eine Freilaufdiode 112 antiparallel geschaltet ist. Die Durchlassrichtung der beiden Halbleiterschalter 109 und 111 ist gleichgerichtet. Die Halbleiterschalter 102 und 104 mit ihnen zugeordneten Freilaufdioden 103, 105 bilden somit eine Reihenschaltung, die einer durch die Halbleiterschalter 109, 111 und die zugeordneten Freilaufdioden 110 und 112 gebildeten Reihenschaltung parallel geschaltet ist. Ein Energiespeicher in Form eines Hochleistungskondensators 106 ist parallel zu den beiden Reihenschaltungen angeordnet. Der erste Anschluss X1 ist an einem Potenzialpunkt 113 zwischen den Halbleiterschaltern 102, 104 angeordnet, der zweite Anschluss X2 ist an einem Potenzialpunkt 114 zwischen den Halbleiterschaltern 109, 111 angeordnet.

Durch eine geeignete Steuerung der Leistungshalbleiter 102, 104, 109 und 111 kann die an den Anschlüssen X1, X2 abfallende Spannung erzeugt werden, die der am Kondensator 106 abfallenden Spannung, der am Kondensator 106 abfallenden Spannung jedoch mit entgegengesetzter Polarität oder der Spannung null entspricht.

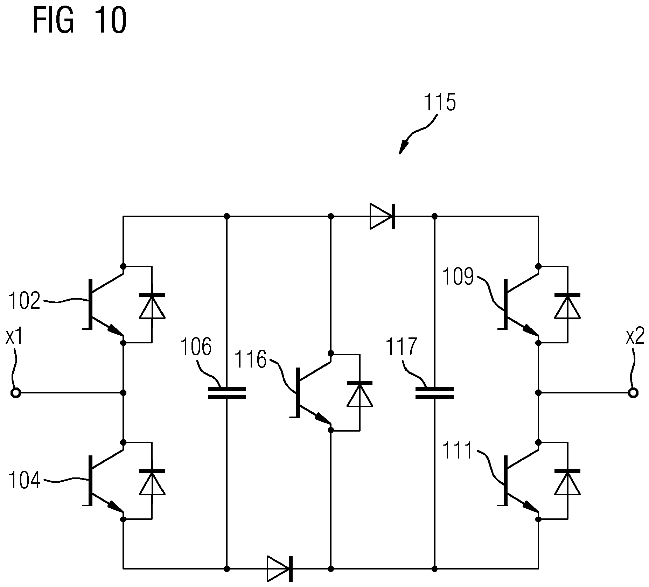

Figur 10 zeigt ein Ausführungsbeispiel eines Submoduls in Form eines sogenannten Clamp-Double-Submodule (CDSM) 115. Ein solches Submodul ist aus der DE 10 2009 057 288 A1 bekannt. Das CDSM 115 zeichnet sich insbesondere dadurch aus, dass bei geeigneter Ansteuerung der Halbleiterschalter 102, 104, 109, 111, 116 des CDSM 115 ein Strom zwischen den beiden Anschlüssen X1 und X2 immer über wenigstens einen der beiden Energiespeicher 106, 117 erfolgen muss.

Bezüglich weiterer Details des Aufbaus und der Funktionsweise des CDSM 115 wird hiermit auf die zuvor genannte Druckschrift DE 10 2009 057 288 A1 verwiesen.

## Patentansprüche

1. Spannungswandleranordnung (1) mit
- einem ersten Umrichter (2), umfassend wenigstens eine Umrichterphase (4) des ersten Umrichters (2), die sich zwischen einem ersten und einem zweiten oberspannungsseitigen Gleichspannungspol (5,6) erstreckt und einen ersten und einen zweiten Phasenzweig (14,15) des ersten Umrichters (8) aufweist, wobei an einem Potenzialpunkt (16) zwischen den beiden Phasenzweigen (14,15) des ersten Umrichters (2) ein Wechselspannungsanschluss des ersten Umrichters (2) angeordnet ist und
- einem zweiten Umrichter (3), umfassend wenigstens eine Umrichterphase (9) des zweiten Umrichters (3), die sich zwischen einem ersten und einem zweiten unterspannungsseitigen Gleichspannungspol (10,11) erstreckt und einen ersten und einen zweiten Phasenzweig (20,21) des zweiten Umrichters (3) aufweist, wobei an einem Potenzialpunkt (24) zwischen den beiden Phasenzweigen (20,21) des zweiten Umrichters (3) ein Wechselspannungsanschluss des zweiten Umrichters (3) angeordnet ist, wobei
die beiden Umrichter (2,3) miteinander wechselspannungsseitig mittels einer Kopplungseinrichtung (25) zu einer Umrichter-Parallelschaltung verbindbar sind, die unter Einbeziehung der Phasenzweige (14,15,20,21) der beiden Umrichter wenigstens einen geschlossenen Strompfad für einen Kreis-Wechselstrom (iAC1,iAC2) durch die Umrichter (2,3) ausbildet,
**dadurch gekennzeichnet, dass**
die Kopplungseinrichtung (25) eine kapazitive Kopplung der Umrichter (2,3) bereitstellt.

2. Spannungswandleranordnung (1) nach Anspruch 1, wobei die kapazitive Kopplung mittels wenigstens eines Kondensators (29,30,31) realisiert ist.

3. Spannungswandleranordnung (1) nach Anspruch 2, wobei der wenigstens eine Kondensator (29,30,31) der Kopplungseinrichtung (25) derart ausgelegt ist, dass sich die Polarität einer an dem wenigstens einen Kondensator (29,30,31) abfallenden Spannung in einem Normalbetrieb der Spannungswandleranordnung (1) nicht ändert.

4. Spannungswandleranordnung (1) nach einem der vorangehenden Ansprüche, wobei die Kopplungseinrichtung (25) einen ersten Verbindungszweig (26) mit wenigstens einem Kondensator (29) aufweist, der die beiden Wechselspannungsanschlüsse (16,24) verbindet.

5. Spannungswandleranordnung (1) nach Anspruch 4, wobei die Kopplungseinrichtung (25)
- einen zweiten Verbindungszweig (27), der den ersten oberspannungsseitigen Gleichspannungspol (5) und den ersten unterspannungsseitigen Gleichspannungspol (10) verbindet sowie
- einen dritten Verbindungszweig (28), der den zweiten oberspannungsseitigen Gleichspannungspol (6) und den zweiten unterspannungsseitigen Gleichspannungspol (11) verbindet, wobei
der zweite Verbindungszweig (27) und/oder der dritte Verbindungszweig (28) einen Kondensator (30,31) aufweisen.

6. Spannungswandleranordnung (40) nach Anspruch 4, wobei
- die wenigstens eine Umrichterphase (4) des ersten Umrichters (2) eine erste Umrichterphase (4) des ersten Umrichters (2) ist, und der Wechselspannungsanschluss (16) des ersten Umrichters (2) ein erster Wechselspannungsanschluss (16) des ersten Umrichters (2) ist, und der erste Umrichter (2) ferner eine zweite Umrichterphase (45) aufweist, die sich zwischen dem ersten und dem zweiten oberspannungsseitigen Gleichspannungspol (5,6) erstreckt und einen dritten und einen vierten Phasenzweig (41,42) aufweist, wobei an einem Potenzialpunkt (49) zwischen dem dritten und vierten Phasenzweig (41,42) des ersten Umrichters (2) ein zweiter Wechselspannungsanschluss (49) des ersten Umrichters (2) angeordnet ist, und
- die wenigstens eine Umrichterphase (9) des zweiten Umrichters (3) eine erste Umrichterphase (9) des zweiten Umrichters (3) ist, und der Wechselspannungsanschluss (24) des zweiten Umrichters (3) ein erster Wechselspannungsanschluss (24) des zweiten Umrichters (3) ist, und der zweite Umrichter (3) ferner eine zweite Umrichterphase (46) aufweist, die sich zwischen dem ersten und dem zweiten unterspannungsseitigen Gleichspannungspol (10,11) erstreckt und einen dritten und einen vierten Phasenzweig (43,44) aufweist, wobei an einem Potenzialpunkt (50) zwischen dem dritten und vierten Phasenzweig (43,44) des zweiten Umrichters (3) ein zweiter Wechselspannungsanschluss (50) des zweiten Umrichters (3) angeordnet ist, wobei
- die Kopplungseinrichtung (25) einen zweiten Verbindungszweig (47) mit wenigstens einem Kondensator (48) aufweist, der den zweiten Wechselspannungsanschluss (49) des ersten Umrichters (2) mit dem zweiten Wechselspannungsanschluss (50) des zweiten Umrichters (3) verbindet.

7. Spannungswandleranordnung (33) nach einem der Ansprüche 1 bis 4, wobei der erste Umrichter (2) ferner einen Parallelzweig (34) umfasst, der sich zwischen dem ersten und dem zweiten oberspannungsseitigen Gleichspannungspol (5,6) parallel zu der Umrichterphase (4) des ersten Umrichters (2) erstreckt, und in dem ein Kondensator (35) angeordnet ist.

8. Spannungswandleranordnung (38) nach Anspruch 7, wobei der Parallelzweig (34) eine Reihenschaltung zweipoliger Konvertermodule (39) aufweist, die jeweils wenigstens einen Halbleiterschalter und einen Kondensator umfassen.

9. Spannungswandleranordnung (60) nach einem der vorangehenden Ansprüche, wobei die Kopplungseinrichtung (25) wenigstens eine Reihenschaltung zweipoliger Kopplungsmodule (61) umfasst, wobei jedes Kopplungsmodul (61) wenigstens einen Halbleiterschalter und einen Kondensator umfasst.

10. Spannungswandleranordnung (60) nach einem der Ansprüche 4 bis 6, wobei wenigstens einer der Verbindungszweige (26-28) eine Reihenschaltung zweipoliger Kopplungsmodule (61) aufweist, wobei jedes Kopplungsmodul (61) wenigstens einen Halbleiterschalter und einen Kondensator umfasst.

11. Spannungswandleranordnung (60) nach einem der Ansprüche 9 oder 10, wobei die Kopplungsmodule (61) als Halbbrückenschaltungen realisiert sind.

12. Spannungswandleranordnung (1) nach einem der vorangehenden Ansprüche, wobei der erste und/oder der zweite Umrichter (2,3) ein modularer Mehrstufenumrichter ist.

## Claims

1. Voltage converter arrangement (1) having
- a first converter element (2), comprising at least one converter element phase (4) of the first converter element (2), which phase extends between a first and a second high-voltage-side DC voltage pole (5, 6) and has a first and a second phase branch (14, 15) of the first converter element (2), wherein an AC voltage terminal of the first converter element (2) is arranged at a potential point (16) between the two phase branches (14, 15) of the first converter element (2) and
- a second converter element (3), comprising at least one converter element phase (9) of the second converter element (3), which phase extends between a first and a second low-voltage-side DC voltage pole (10, 11) and has a first and a second phase branch (20, 21) of the second converter element (3), wherein an AC voltage terminal of the second converter element (3) is arranged at a potential point (24) between the two phase branches (20, 21) of the second converter element (3), wherein
the two converter elements (2, 3) can be connected to one another on the AC voltage side by means of a coupling device (25) to form a converter element parallel circuit, which, including the phase branches (14, 15, 20, 21) of the two converter elements, forms at least one closed current path for a circulating alternating current (iAC1, iAC2) through the converter elements (2, 3),
**characterized in that**
the coupling device (25) provides capacitive coupling of the converter elements (2, 3).

2. Voltage converter arrangement (1) according to Claim 1, wherein the capacitive coupling is realized by means of at least one capacitor (29, 30, 31).

3. Voltage converter arrangement (1) according to Claim 2, wherein the at least one capacitor (29, 30, 31) of the coupling device (25) is designed in such a way that the polarity of a voltage dropped at the at least one capacitor (29, 30, 31) does not change during normal operation of the voltage converter arrangement (1).

4. Voltage converter arrangement (1) according to one of the preceding claims, wherein the coupling device (25) has a first connecting branch (26) having at least one capacitor (29), which branch connects the two AC voltage terminals (16, 24).

5. Voltage converter arrangement (1) according to Claim 4, wherein the coupling device (25) has
- a second connecting branch (27), which connects the first high-voltage-side DC voltage pole (5) and the first low-voltage-side DC voltage pole (10) and
- a third connecting branch (28), which connects the second high-voltage-side DC voltage pole (6) and the second low-voltage-side DC voltage pole (11), wherein
the second connecting branch (27) and/or the third connecting branch (28) has/have a capacitor (30, 31).

6. Voltage converter arrangement (40) according to Claim 4, wherein
- the at least one converter element phase (4) of the first converter element (2) is a first converter element phase (4) of the first converter element (2), and the AC voltage terminal (16) of the first converter element (2) is a first AC voltage terminal (16) of the first converter element (2), and the first converter element (2) also has a second converter element phase (45), which extends between the first and the second high-voltage-side DC voltage pole (5, 6) and has a third and a fourth phase branch (41, 42), wherein a second AC voltage terminal (49) of the first converter element (2) is arranged at a potential point (49) between the third and fourth phase branch (41, 42) of the first converter element (2), and
- the at least one converter element phase (9) of the second converter element (3) is a first converter element phase (9) of the second converter element (3), and the AC voltage terminal (24) of the second converter element (3) is a first AC voltage terminal (24) of the second converter element (3), and the second converter element (3) also has a second converter element phase (46), which extends between the first and the second low-voltage-side DC voltage pole (10, 11) and has a third and a fourth phase branch (43, 44), wherein a second AC voltage terminal (50) of the second converter element (3) is arranged at a potential point (50) between the third and fourth phase branch (43, 44) of the second converter element (3), wherein
- the coupling device (25) has a second connecting branch (47) having at least one capacitor (48), which branch connects the second AC voltage terminal (49) of the first converter element (2) to the second AC voltage terminal (50) of the second converter element (3).

7. Voltage converter arrangement (33) according to one of Claims 1 to 4, wherein the first converter element (2) also comprises a parallel branch (34), which extends between the first and the second high-voltage-side DC voltage pole (5, 6) in parallel with the converter element phase (4) of the first converter element (2), and in which a capacitor (35) is arranged.

8. Voltage converter arrangement (38) according to Claim 7, wherein the parallel branch (34) has a series circuit of two-pole converter modules (39), which each comprise at least one semiconductor switch and a capacitor.

9. Voltage converter arrangement (60) according to one of the preceding claims, wherein the coupling device (25) comprises at least one series circuit of two-pole coupling modules (61), wherein each coupling module (61) comprises at least one semiconductor switch and a capacitor.

10. Voltage converter arrangement (60) according to one of Claims 4 to 6, wherein at least one of the connecting branches (26-28) has a series circuit of two-pole coupling modules (61), wherein each coupling module (61) comprises at least one semiconductor switch and a capacitor.

11. Voltage converter arrangement (60) according to either of Claims 9 and 10, wherein the coupling modules (61) are realized as half-bridge circuits.

12. Voltage converter arrangement (1) according to one of the preceding claims, wherein the first and/or the second converter element (2, 3) is a modular multilevel converter element.

## Revendications

1. Agencement (1) de transformateur de tension, comprenant
- un premier onduleur (2), comprenant au moins une phase (4) du premier onduleur (2), qui s'étend entre un premier et un deuxième pôle (5, 6) de tension continue du côté de la haute tension et qui a une première et une deuxième branche (14, 15) de phase du premier onduleur (2), dans lequel, en un point (16) de potentiel, entre les deux branches (14, 15) de phase du premier onduleur (2), est disposée une borne de tension alternative du premier onduleur (2) et
- un deuxième onduleur (3), comprenant au moins une phase (9) du deuxième onduleur (3), qui s'étend entre un premier et un deuxième pôle (10, 11) de tension continue du côté de la haute tension et qui a une première et une deuxième branche (20, 21) de phase du deuxième onduleur (3), dans lequel, en un point (24) de potentiel entre les deux branches (20, 21) de phase du deuxième onduleur (3), est disposée une borne de tension alternative du deuxième onduleur (3), dans lequel
les deux onduleurs (2, 3) peuvent être reliés l'un à l'autre du côté de la tension alternative, au moyen d'un dispositif (25) de couplage, en un circuit parallèle d'onduleur, qui, en incorporant les branches (14, 15, 20, 21) de phase des deux onduleurs, constitue au moins un trajet de courant fermé pour un courant (iAC1, iAC2) alternatif circulaire passant dans les onduleurs (2, 3),
**caractérisé en ce que**
le dispositif (25) de couplage donne un couplage capacitif des onduleurs (2, 3).

2. Agencement (1) de transformateur de tension suivant la revendication 1, dans lequel le couplage capacitif est réalisé au moyen d'au moins un condensateur (29, 30, 31).

3. Agencement (1) de transformateur de tension suivant la revendication 2, dans lequel le au moins un condensateur (29, 30, 31) du dispositif (25) de couplage est conçu de manière à ce que la polarité d'une tension chutant aux bornes du au moins un condensateur (29, 30, 31) ne se modifie pas dans un fonctionnement normal de l'agencement (1) de transformateur de tension.

4. Agencement (1) de transformateur de tension suivant l'une des revendications précédentes, dans lequel le dispositif (25) de couplage a une première branche (26) de liaison et au moins un condensateur (29), qui relie les deux bornes (16, 24) de tension alternative.

5. Agencement (1) de transformateur de tension suivant la revendication 4, dans lequel le dispositif (25) de couplage a
- une deuxième branche (27) de liaison, qui relie le premier pôle (5) de tension continue du côté de la haute tension et le premier pôle (10) de tension continue du côté de la basse tension, ainsi que
- une troisième branche (28) de liaison, qui relie le deuxième pôle (6) de tension continue du côté de la haute tension et le deuxième pôle (11) de tension continue du côté de la basse tension, dans lequel
la deuxième branche (27) de liaison et/ou la troisième branche (28) de liaison ont un condensateur (30, 31).

6. Agencement (40) de transformateur de tension suivant la revendication 4, dans lequel
- la au moins une phase (4) du premier onduleur (2) est une première phase (4) du premier onduleur (2) et la borne (16) de tension alternative du premier onduleur (2) est une première borne (16) de tension alternative du premier onduleur (2) et le premier onduleur (2) a, en outre, une deuxième phase (45), qui s'étend entre le premier et le deuxième pôles (5, 6) de tension continue du côté de la haute tension, et une troisième et une quatrième branches (41, 42) de phase, dans lequel, en un point (49) de potentiel entre la troisième et la quatrième branches (41, 42) de phase du premier onduleur (2), est disposée une deuxième borne (49) de tension alternative du premier onduleur (2) et
- la au moins une phase (9) du deuxième onduleur (3) est une première phase (9) du deuxième onduleur (3) et la borne (24) de tension alternative du deuxième onduleur (3) est une première borne (24) de tension alternative du deuxième onduleur (3) et le deuxième onduleur (3) a, en outre, une deuxième phase (46), qui s'étend entre le premier et le deuxième pôles (10, 11) de tension continue du côté de la basse tension, et une troisième et une quatrième branches (43, 44) de phase, dans lequel, en un point (50) de potentiel entre la troisième et la quatrième branches (43, 44) de phase du deuxième onduleur (3), est disposée une deuxième borne (50) de tension alternative du deuxième onduleur (3), dans lequel
- le dispositif (25) de couplage a une deuxième branche (47) de liaison, ayant au moins un condensateur (48), qui relie la deuxième borne (49) de tension alternative du premier onduleur (2) à la deuxième borne (50) de tension alternative du deuxième onduleur (3).

7. Agencement (33) de transformation de tension suivant l'une des revendications 1 à 4, dans lequel le premier onduleur (2) comprend, en outre, une branche (34) parallèle, qui s'étend entre le premier et le deuxième pôles (5, 6) de tension continue du côté de la haute tension, en parallèle à la phase (4) du premier onduleur (2), et dans laquelle est monté un condensateur (35).

8. Agencement (38) de transformateur de tension suivant la revendication 7, dans lequel la branche (34) en parallèle a un circuit série de deux modules (39) bipolaires d'onduleur, qui comprennent chacun au moins un interrupteur à semi-conducteur et un condensateur.

9. Agencement (60) de transformateur de tension suivant l'une des revendications précédentes, dans lequel le dispositif (25) de couplage comprend au moins un circuit série de modules (61) de couplage bipolaires, chaque module (61) de couplage comprenant au moins un interrupteur à semi-conducteur et un condensateur.

10. Agencement (60) de transformateur de tension suivant l'une des revendications 4 à 6, dans lequel au moins l'une des branches (26 à 28) de liaison a un circuit série de deux modules (61) de couplage bipolaires, chaque module (61) de couplage comprenant au moins un interrupteur à semi-conducteur et un condensateur.

11. Agencement (60) de transformateur de tension suivant l'une des revendications 9 ou 10, dans lequel les modules (61) de couplage sont réalisés sous la forme de circuit en demi pont.

12. Agencement (1) de transformateur de tension suivant l'une des revendication précédentes, dans lequel le premier et/ou le deuxième onduleur (2, 3) est un onduleur modulaire à plusieurs étages.
